Europäisches Patentamt

European Patent Office

Office européen des brevets

(11) Veröffentlichungsnummer: **0 445 604 B1**

(12) **EUROPÄISCHE PATENTSCHRIFT**

(45) Veröffentlichungstag der Patentschrift: **14.09.94**

(51) Int. Cl.⁵: **B01J 20/32**, B01D 15/08, C08B 37/00

(21) Anmeldenummer: **91102599.7**

(22) Anmeldetag: **22.02.91**

Die Akte enthält technische Angaben, die nach dem Eingang der Anmeldung eingereicht wurden und die nicht in dieser Patentschrift enthalten sind.

(54) **Trennmaterialien für die Chromatographie.**

(30) Priorität: **06.03.90 DE 4006923**

(43) Veröffentlichungstag der Anmeldung:
**11.09.91 Patentblatt 91/37**

(45) Bekanntmachung des Hinweises auf die Patenterteilung:
**14.09.94 Patentblatt 94/37**

(84) Benannte Vertragsstaaten:
**CH DE FR GB LI**

(56) Entgegenhaltungen:
**EP-A- 0 220 719
EP-A- 0 268 997
US-A- 4 539 399**

**J. Liq. Chromat., 9 (2&3), 607-620 (1986).**

(73) Patentinhaber: **MERCK PATENT GmbH
Postfach,
Frankfurter Strasse 250
D-64271 Darmstadt (DE)**

(72) Erfinder: **Cabrera, Karin, Dr.
Am Hermannsberg 21
W-6080 Gross-Gerau (DE)**
Erfinder: **Schwinn, Gisela
Rheinstrasse 307
W-6100 Darmstadt (DE)**
Erfinder: **Lubda, Dieter
Im Bangert 21c
W-6140 Bensheim-Auerbach (DE)**

**Beschreibung**

Die Erfindung betrifft ein neues Trennmaterial für die Chromatographie, das im wesentlichen aus einem Träger und Cyclodextrin, das chemisch über eine Carbamidsäuregruppe daran gebunden ist, besteht, dessen Herstellung und seine Verwendung zur verbesserten Trennung von Substanz- und Enantiomerengemischen mittels Chromatographie.

Die Verwendung von Cyclodextrinen in chromatographischen Trennungen und Reinigungsprozessen ist beispielsweise in einem Übersichtsartikel von W.L. Hinze, in Separation and Purification Methods, 10 (2) 159-237 (1981), beschrieben. Bei der Verwendung von Cyclodextrinlösungen als mobile Phase gibt es dabei jedoch größere Probleme mit der ungenügenden Löslichkeit der $\beta$-Cyclodextrine. In Versuchen wurde Cyclodextrin als stationäre Phase getestet. Dazu wurden polymere Materialien hergestellt. Diese polymeren Gele erfordern jedoch eine lange Analysenzeit und zeigen auch eine geringe mechanische Stabilität, so daß diese Materialien nicht für die Hochleistungsflüssigkeitschromatographie (HPLC) geeignet sind.

Daher wurden Versuche unternommen, Cyclodextrine an eine feste Matrix zu binden. Bekannt sind Cyclodextrine, die über Amin- oder Amidbindungen an Kieselgel gebunden sind. Diese Bindungen waren jedoch hydrolytisch instabil. Man konnte also nicht in wäßriger Phase arbeiten. Im US-Patent 4,539,399 sind kieselgelgebundene Cyclodextrine beschrieben, die über eine Bindung ohne Stickstoff gekuppelt sind. Die Bindung zwischen Cyclodextrin und dem Träger erfolgt hier in der Regel über eine Etherbrücke. Fujimura, K. et al. (1986) beschrieben in J. Liquid Chromatography 9, 607-620 die Auftrennung von Mandelsäurederivaten an einem Trennmaterial, bei dem Cyclodextrine an Kieselgel über eine Carbamatgruppierung gebunden wurden. An diesem Träger waren jedoch die freien Säuren nicht trennbar. Die Autoren betonen mehrfach die Tatsache, daß die von ihnen bereitgestellten Materialien keine basischen Reste, wie z.B. Amine, enthalten und deswegen für die Trennung von Racematen besser geeignet seien. Ein Nachteil bisher bekannter Materialien liegt jedoch darin. daß eine Vielzahl enantiomerer Gemische, z.B. Pharmawirkstoffe oder auch zuckerähnliche Derivate, mit Hilfe dieser Materialien nicht aufgetrennt wenden können.

Die Aufgabe der vorliegenden Erfindung bestand daher darin, ein neues, verbessertes Material, bestehend aus einem Träger und daran chemisch gebundenen Cyclodextrin` zu finden, das universell bei der chromatographischen Trennung (HPLC, LC, DC) enantiomerer Gemische einsetzbar ist und verbesserte Trenneigenschaften erzielt.

Überraschenderweise wurde nun gefunden, daß ein Trennmaterial, bei welchem das Cyclodextrin über eine Carbamidsäuregruppe an den Träger gebunden ist, und das zusätzlich freie Amino- und/oder Iminogruppen enthält, die oben genannten Kriterien in hervorragender Weise erfüllt.

Gegenstand der Erfindung ist daher ein Trennmaterial für die Chromatographie, im wesentlichen bestehend aus einem Träger und Cyclodextrin, das über eine Carbamidsäuregruppe chemisch an diesen Träger gebunden ist, dadurch gekennzeichnet, daß der Träger freie Amino- und/oder Iminogruppen enthält.

Ferner ist Gegenstand der Erfindung ein Verfahren zur Herstellung dieses Trennmaterials, bei welchem zunächst das Cyclodextrin durch Umsetzung mit einem Chlorameisensäureester aktiviert wird, und man dieses aktivierte Cyclodextrin dann entweder

a) mit einem Aminosilan, das mindestens eine weitere reaktionsfähige Gruppe enthält, zu dem entsprechenden Cyclodextrin-Silanderivat umsetzt, und dann dieses reaktionsfähige Derivat mit dem Träger in einer Silanisierungsreaktion reagieren läßt,

oder

b) direkt mit einem Träger, der durch eine Silanisierungsreaktion mit Aminogruppen modifiziert ist, koppelt,

wobei jeweils zwischen dem Cyclodextrin und dem Rest eine Carbamidsäuregruppe ausgebildet wird.

Weiterhin ist Gegenstand der Erfindung die Verwendung dieser Trennmaterialien zur chromatographischen Trennung von Substanzgemischen und insbesondere von Enantiomeren.

Als Träger können Kieselgel oder auch andere anorganische Materialien, wie z.B. $Al_2O_3$, $TiO_2$ oder $ZrO_2$, oder auch synthetische Polymerträger, die vorzugsweise bereits freie $NH_2$-Gruppen tragen, eingesetzt werden.

Als synthetische Polymerträger kommen dabei beispielsweise Polymere aus (Meth)Acrylamidderivaten oder Vinylderivaten in Frage.

Als Träger wird vorzugsweise Kieselgel eingesetzt, das in einer Vielzahl von verschiedenen Formen und Größen im Handel erhältlich ist.

Die Herstellung des erfindungsgemäßen Materials kann also auf zwei verschiedenen Wegen erfolgen. Der erste und wichtige Schritt ist jedoch bei beiden Varianten gleich. Das Cyclodextrin, das in $\alpha$-, $\beta$-, $\delta$- oder $\gamma$-Form vorliegen kann, wobei insbesondere das $\beta$-Cyclodextrin bevorzugt ist, wird durch Umsetzung mit einem Chlorameisensäureester in ein aktiviertes Cyclodextrin überführt. Prinzipiell kann dafür jeder Chlorameisensäureester eingesetzt werden. Bevorzugt sind solche Ester, die als Estergruppe eine gute Abgangsgruppe enthalten. Als ganz besonders bevorzugte Aktivierungsreagentien haben sich Chlorameisensäure-p-nitrophenylester aber auch Chlorameisensäure-N-succinimidester herausgestellt. Diese Umsetzung wird vorzugsweise bei Raumtemperatur in Gegenwart einer Base durchgeführt.

Das so aktivierte Cyclodextrin wird in der Variante a) nun folgendermaßen weiter umgesetzt: Das Cyclodextrin wird mit einem Aminosilan, das mindestens eine weitere reaktionsfähige Gruppe besitzt, um anschließend mit dem Träger reagieren zu können, umgesetzt, wobei bereits die Carbamidsäurebindung zwischen dem Cyclodextrin und dem Silanderivat ausgebildet wird. Als Aminosilane können hier alle, dem Fachmann bekannten und geläufigen Silane eingesetzt werden, die folgende zwei Kriterien aufweisen: sie müssen eine Aminogruppe enthalten sowie mindestens eine weitere, für eine Silanisierungsreaktion mit dem Träger geeignete reaktionsfähige Gruppe, wie z.B. eine Alkoxygruppe oder ein Halogen.

Insbesondere sind Silane geeignet, die der folgenden allgemeinen Formel entsprechen:

$$R\text{-}SiX_3$$

wobei

R    Alkyl, Aryl oder Aralkyl mit jeweils bis zu 20 C-Atomen enthaltend jeweils mindestens eine Aminogruppe, wobei eine oder mehrere nicht unmittelbar benachbarte $CH_2$-Gruppen eines Alkylrestes durch NH-Gruppen ersetzt sein können, und

X    Alkoxy, Aralkoxy oder Alkyl mit jeweils bis zu 20 C-Atomen, mit der Maßgabe, daß mindestens ein X Alkoxy oder Aralkoxy ist,

bedeuten.

Solche Silanisierungsmittel sind in großer Zahl aus der Literatur bekannt oder können in Analogie zu bekannten Methoden hergestellt werden. Sie sind für das erfindungsgemäße Verfahren in gleicher Weise geeignet wie für die bekannten Modifizierungen von Oberflächen von Sorbentien.

Ganz besonders bevorzugt sind Silane wie z.B. 3-Aminopropyltrimethoxysilan, 3-Aminopropyltriethoxysilan, 3-(2-Aminoethyl)aminopropyltriethoxysilan, 3-(2-Aminoethyl)aminopropyltrimethoxysilan.

Die Reaktion wird zweckmäßiger Weise bei Raumtemperatur mit einer Reaktionsdauer von - je nach Ansatzgröße - 30 Minuten bis zu einigen Stunden durchgeführt.

Im dritten Schritt wird um dieses Cyclodextrinsilanderivat in einer allgemein bekannten Silanisierungsreaktion mit dem Träger, der Hydroxylgruppen aufweist, um Endprodukt gekoppelt.

Die Bedingungen dieser Umsetzung kann der Fachmann frei aus der Literatur wählen, vorzugsweise wird die Reaktion bei Raumtemperatur durchgeführt und dauert einige Stunden.

Der Träger wird vor der Umsetzung zweckmäßigerweise getrocknet.

In der zweiten Variante wird zunächst ebenfalls das Cyclodextrin wie beschrieben aktiviert. Anschließend koppelt man dieses aktivierte Cyclodextrin mit einem bereits mit Aminogruppen modifizierten Träger. Dieses $NH_2$-modifizierte Material kann man entweder fertig im Handel erwerben, oder aber auch durch eine Silanisierungsreaktion des Trägers mit einem entsprechenden Aminosilan herstellen. Hierfür kommen die bereits beschriebenen Aminosilane in Frage.

Auch hier bildet sich zwischen dem Cyclodextrin und den $NH_2$-Gruppen des Trägers eine Carbamidsäuregruppe aus. Die Umsetzung erfolgt auch hier vorzugsweise bei Raumtemperatur.

Bei dieser Reaktionsfolge bleibt ein Teil der Aminogruppen auf dem Träger unsubstituiert erhalten. Diese bilden zusammen mit gegebenenfalls zusätzlich vorhandenen Iminogruppen die stickstoffhaltigen basischen Reste und sichern die erfindungsgemäße Wirkung.

Die Verbindung zwischen dem Träger und dem Cyclodextrin kann aus einer kürzeren oder auch längeren Kette bestehen. Das hängt ganz von dem eingesetzten Silan ab. Die Kette hat vorzugsweise 3-20 Atome und kann neben C-Atomen auch N- oder O-Atome enthalten.

Erfindungsgemäß enthalten die Trägermaterialien neben den carbamatgebundenen Cyclodextrinen also stets stickstoffhaltige basische Reste, d.h. freie Amino- und/oder Iminogruppen.

Selbstverständlich sind auch erfindungsgemäße Materialien, die gleichzeitig zwei verschiedene Cyclodextrine gebunden haben, wie z.B. $\beta$- und $\gamma$-Cyclodextrin, nach den hier beschriebenen Methoden herstellbar . Solche Materialien zeigen ebenfalls eine sehr breite Selektivität.

Das erfindungsgemäße Material kann, falls gewünscht, ferner noch einer sog. "end-capping" Reaktion unterworfen werden. Dabei werden z.B. in bekannter Art und Weise die restlichen Hydroxylgruppen auf der Kieselgeloberfläche mit einem reaktiven Silan wie z.B. Trimethylchlorsilan oder auch Hexamethyldisilazan umgesetzt, um die Blockierung der Oberflächenhydroxylgruppen zu vervollständigen.

Die erfindungsgemäßen, neuen Materialien stellen hervorragende Trennmaterialien für die chromatographische Trennung einer Vielzahl von Substanzen, insbesondere von enantiomeren Gemischen, dar. Sie sind

3

universell einsetzbar, beispielsweise auch für Pharmawirkstoffe oder für zuckerähnliche Derivate, die mit den aus dem Stand der Technik bekannten Materialien bisher nicht aufzutrennen waren.

Die erfindungsgemäßen Materialien werden vorzugsweise in der LC oder HPLC eingesetzt. Sie können aber auch in bekannter Weise auf Platten aufgetragen werden und somit in der Dünnschichtchromatographie eingesetzt werden.

Die folgenden Herstellungs- und Anwendungsbeispiele sollen die Erfindung näher erläutern ohne sie zu begrenzen. Alle Temperaturen sind in °Celsius angegeben:

Beispiele

Herstellung der erfindungsgemäßen Materialien

1. $\beta$-Cyclodextrin wird 4 Stunden bei 100° im Vakuum getrocknet.

4,4 mmol $\beta$-Cyclodextrin werden in 50 ml Pyridin gelöst und mit 30,8 mmol Chlorameisensäure-p-nitrophenylester 2 Stunden lang bei 20° zu dem aktivierten $\beta$-Cyclodextrin umgesetzt.

Danach gibt man 10,0 g LiChrospher® 100 NH$_2$ (5 $\mu$m, Fa. E. Merck) zu, das vorher 4 Stunden bei 100° im Vakuum getrocknet wurde. Man läßt das Gemisch 4 Stunden bei 20° reagieren. Man filtriert über eine Glasfritte ab und spült mit Pyridin, Wasser, Ethanol und Petrolether (in dieser Reihenfolge) nach.

Man erhält ein Produkt, das folgende CHN-Analyse hat: C: 9,6 %, N: 0,8 %; H: 1,62 %

2. 4,4 mmol $\beta$-Cyclodextrin (vorher bei 100° im Vakuum 4 Stunden getrocknet) werden in 50 ml Pyridin mit 8,8 mmol Chlorameisensäure-p-nitro-phenylester versetzt und 2 Stunden bei 20° aktiviert. Anschließend gibt man 1,17 g 3-(2-Aminoethyl)aminopropyltrimethoxysilan zu und rührt 2 Stunden bei 20°.

Nach der Zugabe von 10,0 g LiChrospher® 100, 10 $\mu$m (Fa. E. Merck) rührt man 18 Stunden bei 20°. Die Aufarbeitung erfolgt analog Beispiel 1.

Man erhält ein Produkt, das folgende CHN-Werte aufweist: C: 5,0 %; N: 0,7 %; H 0,96 %.

Trennbeispiele

3. Das nach Beispiel 1 hergestellte Material wird in eine Säule gefüllt (LiChroCART® 250-4) und folgende myo-Inosite werden damit unter HPLC-Bedingungen getrennt:

| Substanz | Laufmittel Acetonitril/ Wasser | Fluß ml/min | Detektion UV | RT in Minuten |
|---|---|---|---|---|
| DL-1-O-Benzyl-myo-Inosit | 1/99 | 1,0 | 220 nm | 11,21/12,57 |
| DL-1-O-Benzyl-2,3-O-Cyclohexyliden-6-O-Butyryl-myo-Inosit | 10/90 | 1,0 | 220 nm | 13,78/15,57 |
| DL-1,4,5,6-Tetra-O-Benzyl-myo-Inosit | 15/85 | 1,0 | 220 nm | 36,85/48,86 |

Diese Substanzen wurden hervorragend in ihre D- und L-Form aufgetrennt. Vergleichsweise wurde eine Trennung dieser Substanzen unter gleichen Bedingungen an einer Säule, gefüllt mit dem Material aus dem Stand der Technik (Cyclobond I, Fa. Astec), versucht, die jedoch negativ verlief. Es konnte mit diesem Material keine Trennung erzielt werden.

4. Analog Beispiel 3 wurden folgende Kaliumkanalaktivatoren mit dem erfindungsgemäßen Material in ihre optischen Antipoden aufgetrennt:

Laufmittel: MeOH/0,025 M Puffer pH = 2,5 20/80
Fluß: 0,4 ml/min
Detektion: UV 220 nm

| Substanz | RT in min. |
|---|---|
| (±)-6-Cyan-3,4-epoxy-2,2-dimethylchroman | 24,50/26,36 |
| (±)-6-Cyan-3,4-epoxy-2,2,3-trimethylchroman | 45,38/56,22 |
| (±)-6-Cyan-2,2,3-trimethyl-4-(1,6-dihydro-6-oxo-pyridazin-3-yl-oxy)-chroman-3-ol | 80,73/84,38 |
| (±)-6-Cyan-2,2-dimethyl-4-(1,6-dihydro-1-methyl-6-oxo-pyridazin-3-yl-oxy)-chroman-3-ol | 42,19/54,52 |
| (±)-6-Cyan-2,2-dimethyl-4-(1,2-dihydro-2-oxo-pyridyl)-chroman-3-ol | 18,48/20,82 |

Auch diese Beispiele zeigen deutlich, daß das neue Material hervorragend zur Trennung von Pharmawirkstoffen geeignet ist.

**Patentansprüche**

1. Trennmaterialien für die Chromatographie, im wesentlichen bestehend aus einem Träger und Cyclodextrin, das über eine Carbamidsäuregruppe chemisch an diesen Träger gebunden ist, dadurch gekennzeichnet, daß der Träger freie Amino- und/oder Iminogruppen enthält.

2. Verfahren zur Herstellung eines Trennmaterials gemäß Anspruch 1 dadurch gekennzeichnet, daß zunächst das Cyclodextrin durch Umsetzung mit einem Chlorameisensäureester aktiviert wird, und man dieses aktivierte Cyclodextrin dann entweder

   a) mit eine Aminosilan, das mindestens eine weitere reaktionsfähige Gruppe enthält, zu dem entsprechenden Cyclodextrin-Silanderivat umsetzt, und dann dieses reaktionsfähige Silan mit dem Träger in einer Silanisierungsreaktion reagieren läßt,

   oder

   b) direkt mit einem Träger, der durch eine Silanisierungsreaktion mit Aminogruppen modifiziert ist, koppelt,

   wobei jeweils zwischen dem Cyclodextrin und den Aminogruppen eine Carbamidsäuregruppe ausgebildet wird.

3. Verfahren nach Anspruch 2, dadurch gekennzeichnet, daß der verwendete Träger Kieselgel ist.

4. Verfahren nach Anspruch 2 oder 3, dadurch gekennzeichnet, daß als Chlorameisensäureester Chlorameisensäure-p-nitro-phenylester oder Chlorameisensäure-N-succinimidester eingesetzt werden.

**5.** Verwendung der Trennmaterialien nach Anspruch 1 zur chromatographischen Trennung von Substanzgemischen.

**6.** Verwendung der Trennmaterialien nach Anspruch 1 zur chromatographischen Trennung von Enantiomeren.

**Claims**

**1.** Separating materials for chromatography, essentially comprising a support and cyclodextrin chemically bonded to this support via a carbamic acid group, characterized in that the support contains free amino and/or imino groups.

**2.** Process for the production of a separating material according to Claim 1, characterized in that the cyclodextrin is first activated by reaction with a chloroformic acid ester, and this activated cyclodextrin is then either

a) reacted with an aminosilane containing at least one further reactive group to give the corresponding cyclodextrin-silane derivative, and this reactive silane is then allowed to react with the support in a silanisation reaction,

or

b) coupled directly with a support which has been modified by a silanisation reaction with amino groups, a carbamic acid group in each case being formed between the cyclodextrin and the amino groups.

**3.** Process according to Claim 2, characterized in that the support used is silica gel.

**4.** Process according to Claim 2 or 3, characterized in that the chloroformic acid ester is p-nitrophenyl chloroformate or N-succinimido chloroformate.

**5.** Use of the separating materials according to Claim 1 for the chromatographic separation of substance mixtures.

**6.** Use of the separating materials according to Claim 1 for the chromatographic separation of enantiomers.

**Revendications**

**1.** Matières séparatrices pour la chromatographie, consistant essentiellement en un support et de la cyclodextrine combinée chimiquement à ce support par l'intermédiaire d'un groupe acide carbamique, et caractérisées en ce que le support contient des groupes amino et/ou imino libres.

**2.** Procédé de préparation d'une matière séparatrice selon revendication 1, caractérisé en ce que l'on active d'abord la cyclodextrine par réaction avec un ester chloroformique et,

a) ou bien on fait réagir cette cyclodextrine activée avec un aminosilane contenant au moins un autre groupe réactif, ce qui donne le dérivé correspondant de cyclodextrinesilane, puis on fait réagir ce silane réactif avec le support dans une réaction de silanisation,

b) ou bien on couple directement cette cyclodextrine activée avec un support modifié par des groupes amino dans une réaction de silanisation,

avec formation dans les deux cas d'un groupe acide carbamique entre la cyclodextrine et les groupes amino.

**3.** Procédé selon revendication 2, caractérisé en ce que le support utilisé est du gel de silice.

**4.** Procédé selon revendication 2 ou 3, caractérisé en ce que l'ester chloroformique utilisé est le chloroformiate de p-nitrophényle ou le chloroformiate de N-succinimide.

**5.** Utilisation des matières séparatrices selon revendication 1 pour la séparation par chromatographie de mélanges de substances.

6. Utilisation des matières séparatrices selon revendication 1, pour la séparation par chromatographie d'énantiomères.